# EUROPEAN PATENT SPECIFICATION

(11) **EP 1 808 331 B1**
(45) Date of publication and mention of the grant of the patent: **07.04.2010**
(21) Application number: 07250122.4
(22) Date of filing: 12.01.2007
(51) Int. Cl.: B60N 2/28

(54) **Belt guide**
Gurtführung
Guide de ceinture

(30) Priority: 12.01.2006 GB 0600608; 21.02.2006 GB 0603458
(43) Date of publication of application: 18.07.2007
(73) Proprietor: HTS HANS TORGERSEN & SØNN A/S, 3535 Krøderen (NO)
(72) Inventor: Vertegaal, Henk, 7556 SL Hengelo (NL)
(74) Representative: Onsagers Ltd

(56) References cited:
- EP-A- 0 751 033
- WO-A-98/18650
- WO-A-98/25788
- US-A- 6 030 047
- US-A- 6 045 184

## Description

The invention concerns a child safety seat provided with at least one belt guide unit for the arrangement of at least a portion of a seat belt. The belt guide unit is preferably integrated in or connected to at least one section of the child safety seat, or integrated in or connected to at least an additional part arranged on or adjacent to the child safety seat.

The belt guide unit has the function of positioning the safety seat belt of the vehicle in a correct position onto the child placed in the child safety seat. Preferably, the belt guide is prepared for the positioning of the diagonal portion of the safety seat belt.

Two belt guides integrated in each of the two lateral flank of the head rest of a child safety seat, are disclosed in EP-A-0 751 033. Each belt guide is configured as a fixing device providing a clamping force onto a portion of the seat belt, by placing the fixing device in a closed position. When the child safety seat needs adjustment to suit children of various heights, the head rest is moved upwards or downwards according to the height of the shoulder of the child, and the belt guide then secure the correct position of the seat belt accordingly. However, as the arrangement shown in EP-A-0 751 033 is not prepared for adjusting the belt guide according to the width of the shoulder of the child, the belt guides are kept in a fixed position in the width direction for all height positions. By this arrangement the requirements for positioning the seat belt correctly on the shoulder of the child is not obtained for all shoulder heights.

From WO 98/18650 A and WO 98/25788 A is known adjustable belt guide units that are configured to move between a plurality of different adjustment positions. Each belt guide unit comprises an adjustment rail and a housing for a vehicle safety belt,
where the belt guide unit is fixed to the upper portion of the child safety seat. The belt guide unit is adjusted in the height direction of the child safety seat by moving the housing relative to the adjustment rail. However, these solutions will only provide an adjustment according to the height of the shoulder of the child, and not to the width of the shoulder of the child.

US-A-6, 045, 184 disclose a child seat, where the distance between shoulder belts can be adjusted in accordance with the height of a seat plate. As the seat plate is moved up and down, an interlocking member is also moved up and down so that shoulder belt guides engaged with elongated holes of the interlocking member slide closer to and apart from each other, thereby adjusting the distance between the shoulder belts.

To achieve an optimum effect of the seat belt onto the child during an emergency situation such as during a sudden retardation of the vehicle, the seat belt needs to be placed in a correct position onto the upper part of the child's body. By positioning the seat belt on to the child in such a way that the seat belt is placed crossing the middle of the shoulder as requested, the effect of reducing the forward movement of the child is optimized. As the arrangement of EP-A-0 751 033 is provided to allow for adjustment only in the height direction of the safety seat, the arrangement does not provide a solution adapted for producing the correct position of the seat belt in accordance with the varying width of the child's shoulder. The lack of this arrangement may cause the misplacement of the seat belt onto the neck of the child or onto the upper arm of the shoulder. These maladjusted positions of the seat belt may cause severe injuries to the child during sudden breaking of the vehicle.

A need for producing a belt guide unit which is adaptable for positioning the seat belt correctly onto the shoulder, has evoked based on the not satisfactory prior art solutions as mentioned above. It is an object of the invention to provide a child safety seat wherein the belt guide unit is provided to assure a correct position of the seat belt on the shoulder of the child. The belt guide unit is arranged to be adjustable depending on the size of the child, wherein also the width of the shoulder of the child is taken into consideration. The object of the invention is achieved in accordance with the independent claims, wherein embodiments of the invention are presented in the dependent claims.

In accordance with the invention, the belt guide unit is provided for the arrangement of at least a portion of a seat belt. The belt guide unit may be provided as a separate unit or may be connected to at least one section of the child safety seat or to at least an additional part arranged on or adjacent to the child safety seat. Alternatively, the belt guide unit may be integrated in or connected to at least one section of the child safety seat or to at least an additional part arranged on or adjacent to the child safety seat. The belt guide unit is provided to be adjustable in at least a first direction, preferably the width direction, to position the seat belt correctly on the shoulder of the child. The belt guide unit may be provided adjustable in various directions, to obtain the correct position of the seat belt, by varying the placement of the seat belt in the width direction of the safety seat to fit the width of the shoulder of the child.

In a preferred embodiment of the invention, the child safety seat will be arranged adjustable in the height direction of the child safety seat, to fit the seat belt in accordance with the varying height of the shoulder of the child.

The adjustment of the belt guide unit may be carried out in various ways as long as the object of positioning the seat belt correctly on to the shoulder is achieved. The adjustment may be done manually, i.e. the belt guide unit may be adjusted by hand operating the belt guide unit directly, or the belt guide unit may be arranged with a structure dedicated for operating the belt guide unit, such as for instance a handle. Alternatively, the adjustment is caused by the movement of at least one section of the child safety seat or by at least an additional part arranged on or adjacent to the child safety seat.

The number and arrangement of the belt guide unit may vary according to the various versions of child safety seat. In one embodiment the child safety seat is provided with one belt guide unit. The belt guide unit may be arranged with the necessary means to be moved between the right side and left side of the child safety seat. The moving of the belt guide unit may be carried out by manually demounting the belt guide unit from one side and mounting it at the other side. Or arrangements may be provided so that the belt guide unit easily may be shifted from one side to the other, without the need of demounting and mounting.

In another embodiment the child safety seat may be provided by at least two belt guide units. Preferably, the number of belt guide units is two, but to meet particular needs, it might be necessary to arrange the child safety seat with more than two belt guide units. When using at least two belt guide units, the adjustment of one of the belt guide units may be arranged so that it causes the adjustment of at least one of the other belt guide units. By this arrangement the belt guide units need only to be adjusted to the particular child once, where after the child safety seat may be used both on the right and left side of the vehicle.

In one embodiment the child safety seat may be provided so that the movement of at least one section causes the adjustment of at least one of the two belt guide units. Thus in this embodiment the movement of the section(s) is connected to the reposition of the belt guide. In a further embodiment the adjustment of the belt guide unit causes the adjustment of at least one of the other belt guide units.

As mentioned earlier the belt guide unit is connected to at least one section of the child safety seat or to at least an additional part arranged on or adjacent to the child safety seat. The child safety seat may comprise one section, two sections, three sections, four sections etc. The section or sections where to the belt guide unit is connected may be constituted by for instance a head rest, a back rest, a sitting section, a connecting device such as a rod for connecting at least two of the sections or any other component making up the child safety seat. As the skilled person will understand, the number of sections or the functions of the sections where to the belt guide unit is connected are not completely appointed herein, as various section may be applicable for the task to be carried out. This same applies to the additional part arranged on or adjacent to the child safety seat. The additional part may be any sort of element or arrangement providing a basis for the belt guide unit, or used for adjusting the belt guide unit cooperating with other sections or other additional parts to adjust the belt guide unit.

In accordance with one embodiment the adjustment of the belt guide unit may be brought about or caused by the relative movement between at least two sections of the child safety seat. Alternatively, the adjustment might be conducted by the relative movement between at least one section of the child safety seat and/or at least an additional part arranged on or adjacent to the child safety seat. As the skilled person will realize the afore description of the sections or additional part of choice also applies for these embodiments. The relative movement may be produced by any kind of movement such as angular or rectilinear.

In one embodiment the relative movement between at least two sections of the child safety seat may be provided by at least a first section and a second section of the child safety seat, which are arranged movable relative to each other. Preferably the first section is constituted by a head section and the second section is constituted by a back section. The belt guide unit has first attachment means providing a connection to the first section of the child safety seat, and further second attachment means providing a connection to the second section of the child safety seat. The child safety seat comprises at least a first and a second section, but may also comprise a third, fourth, fifth etc section. At least the first and second section are arranged to be moved relative to each other. Alternatively, the relative movement may in accordance with the invention occur between a first, second, third, fourth sections etc. The relative movement may be conducted by moving one of the sections relative to the other, or by moving plural of the sections relative to the other(s), or by moving all sections relative to each other. The relative movement between at least the first and second section, or for instance between first, second, third etc, causes adjustment preferably displacement of the belt guide unit. As the skilled person will understand the relative movement between sections (first, second, third etc) of the child safety seat may be provided in various ways. Preferably, the first section comprises the head rest of the child safety seat. The head rest may be arranged to be moved relative to the second section, constituted by the back rest of the child safety seat. In one embodiment the second section may be constituted by both the back rest and the sitting section of child safety seat. In another embodiment the second section may be constituted by the back rest and a third section may be constituted by the sitting section. In yet another embodiment the first, second, third sections may be constituted by other parts of the child safety seat than the head rest, back rest, sitting section. As the skilled person will realize the inventive concept is to provide a solution wherein the relative movement produced by moving at least a first and a second section, is connected to the adjustment of the belt guide unit, and this solution is not necessarily restricted to dedicated parts of the of child safety seat, as various parts may appear as fit for carrying out the relative movement.

In an alternate embodiment of the invention the belt guide unit brings about the relative movement between the first and second section, or first, second, third etc section.

The relative movements between at least the first and second section may occur in various ways. The relative movement between the first and second section may be a rectilinear or an angular movement. Preferably, the relative movement is produced by the head rest (first section) being arranged to move for instance in the height direction of the child safety seat, for instance by a rectilinear movement, while the back section (second section) and/ or sitting section (third section) is at rest. Alternatively, all sections may be arranged movable or the back rest and /or sitting section may be arranged movable.

In the following the invention will be explained using an embodiment, wherein the first section (preferably the head rest) and second section (preferably the back section) are movably arranged relative to each other. As the skilled person will understand, the following explanation is to be understood applicable also to the embodiments wherein the relative movement occurs between more than two sections or in the case where the two sections are provided by other parts of the child safety seat, than the head rest and the back section.

The displacement of the belt guide unit may be arranged in different ways, for instance by moving the belt guide unit angularly, rectilinearly etc. The belt guide unit may comprise a holding portion and an attachment portion. The attachment portion may be provided with the first and second attachment means. The holding portion may be arranged for receiving a portion of the seat belt. Preferably, the belt guide unit is arranged so that the holding portion is shifted in the width direction of the child safety seat, thereby providing the opportunity of positioning the seat belt correctly onto the shoulder of the child. The seat belt may be applied to the belt guide unit by using different kind of arrangements. In a preferred embodiment the holding portion is arranged for receiving a portion of the seat belt, and the belt holding portion may arranged as an opening, an open or closable hook or any other suitable structure or arrangement.

In a first embodiment of the invention, the displacement of the belt guide unit is carried out as an angular movement. In a second embodiment of the invention the displacement of the belt guide unit is carried out as a rectilinear movement. As the skilled person will understand, the displacement of the belt guide unit may within the scope of the invention, be carried out by other arrangements than angular or rectilinear movements.

To carry out the angular displacement of the belt guide unit in accordance with the first embodiment, the first attachment means may provide a pivotal connection between the belt guide unit and the first section of the child safety seat. Further, the second attachment means may provide a pivotal connection between the belt guide unit and the second section of the child safety seat.

The pivotal connections may be provided by various arrangements. For instance a pivot bearing, a hinge, a rod shaped structure, an axle functioning as a pivot axis or other arrangements capable of providing the possibility of pivoting or angular movement. The pivotal connection may be provided by an embodiment wherein the first attachment means comprises a first connecting device. A first portion of the first connecting device is fixed to the first structure of the child safety seat, and a second portion of the first connecting device is pivotally connected to the belt guide unit. Further, the second attachment means may comprise a second fastening device. A first portion of the second connecting device may be fixed directly or indirectly to the second structure of the child safety seat, and the second portion of the second connecting device may be pivotally connected to the belt guide unit.

To carry out the rectilinear displacement of the belt guide unit in accordance with the second embodiment, the first attachment means provides a sliding connection between the belt guide unit and the first section of the child safety seat. In a preferred version of this second embodiment, the sliding connection provides for the belt guide unit to be displaced by a rectilinear movement in the width direction of the child safety seat. The second attachment means may provide a sliding connection between the belt guide unit and the second section of the child safety seat.

The second attachment means may comprise a second fastening device. The first portion of the second connecting device is fixed directly or indirectly to the second structure of the child safety seat. Further, the second attachment means may also comprise a recess provided in the belt guide unit, wherein the recess may have an angular orientation. In a preferred version of this second embodiment, the second portion of the second connecting device is received in the recess to carry out the sliding connection. As the skilled person will realize, the sliding connection may be provided by other arrangements than a fastening device and a recess, such as for instance a gear rack or rods. Further, if using a recess this may have various angular orientation other than mentioned here.

The fixing of the second connecting device to the second structure of the child safety seat may be carried out by using a joining device of some kind. For instance at least a rod may be used as the connection between the second connecting device and the second structure of the child safety seat.

The pivotal or rectilinear connection arrangement between the belt guide unit and first and second section child safety seat respectively, may be provided so that moving the first section upwards or downwards in the height direction of the child safety seat, causes the belt guide unit to pivot or move rectilinearly outwards or inwards in the width direction of the child safety seat. Alternatively the child safety seat may be arranged so that the moving of the rod causes the displacement of the belt guide unit.

The invention also include a method for shifting the position of the belt guide unit, wherein the method is defined by the step of moving at least the first section, second section or third section etc or moving a combination of these section. This movement causes shifting of the belt guide unit, preferably moving angularly or rectilinearly.

The method may further be defined by the steps of moving the first section or/and the second section, thirds section etc upwards in the height direction of the child safety seat, thereby causing shifting of the belt guide unit, preferably angularly or rectilinearly, outwards in the width direction of the child safety seat. The method also include the step of moving the first section or/and the second section, thirds section etc downwards in the height direction of the child safety seat, thereby causing shifting of the belt guide unit preferably angularly or rectilinearly, inwards in the width direction of the child safety seat.

In the following an example an embodiment of the invention will be described, by way of example, with reference to the accompanying drawings;
Fig 1 illustrates the belt guide unit placed in a first position on the child safety seat in accordance with a first embodiment of the invention.
Fig 2 illustrates the belt guide unit placed in a second position on the child safety seat in accordance with a first embodiment of the invention.
Fig 3 illustrates the belt guide unit placed in a first position on the child safety seat in accordance with a second embodiment of the invention.
Fig 4 illustrates the belt guide unit placed in a second position on the child safety seat in accordance with a second embodiment of the invention.
Fig 5 illustrates the belt guide unit placed in a first position on the child safety seat in accordance with a third embodiment of the invention.
Fig 6 illustrates the belt guide unit placed in a second position on the child safety seat in accordance with a third embodiment of the invention.

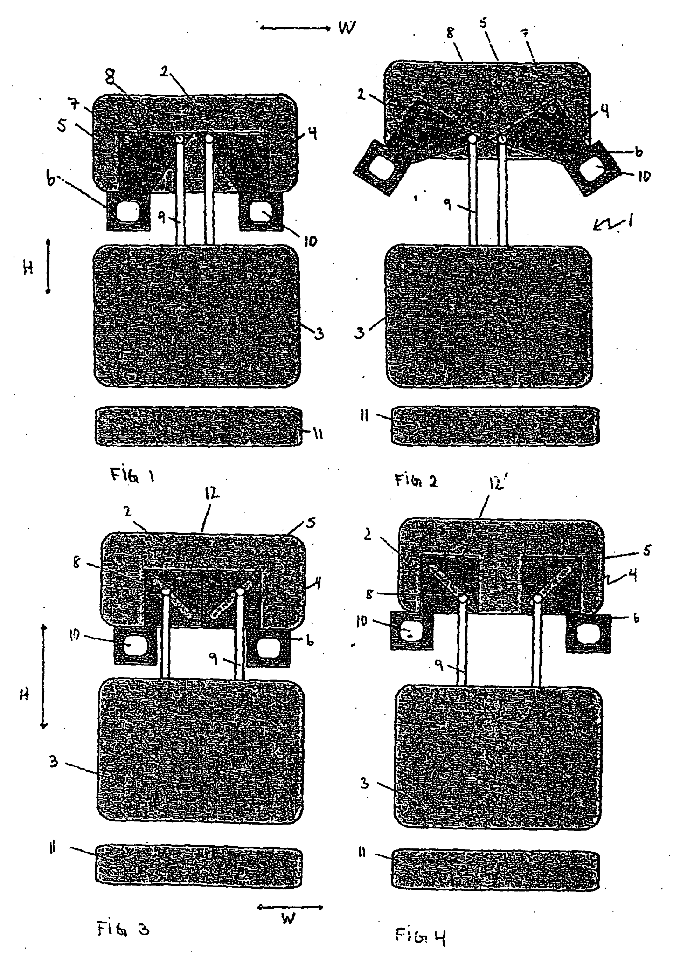

Figs 1-6 show a child safety seat 1 comprising a first section 2, preferably a head section, and a second section 3, preferably a back section, and a third section 11, preferably a sitting section. The child safety seat 1 is provided with belt guide units 4 which acts as a control device for positioning the seat belt in the right position on the shoulder of the child. The two belt guides 4 are arranged on the left and the right side of the child safety seat 1 respectively, thereby providing the opportunity of using a seat belt placed either at the left or right side of the child safety seat 1. The belt guide unit 4 is defined by an attachment portion 5 which provides the connection to the child safety seat 1, and a holding portion 6 which provides an arrangement for the fastening of the seat belt to the belt guide unit 4. In the figures the attachment portion 5 and the holding portion 6 are shown as integrated parts of the belt guide unit 4. Alternatively, the attachment portion 5 and the holding portion 6 may be provided as separate parts connected to make up the belt guide unit 4.

The belt guide unit 4 may be arranged with an opening 10 dedicated for receiving a portion of the seat belt (not shown in the figures). The opening 10 is preferably positioned in the holding portion 6 of the belt guide unit 4, wherein the opening 10 may be constituted by an open or closable hook or any other arrangement, prepared for receiving and providing certain holding capabilities for keeping the seat belt portion in position at the belt guide unit 4.

The belt guide unit 4 as shown in the figures is provided for being regulated and thus displaced when at least one section of the child safety seat such as the first section 2, second section 3, rod 9 are moved relative to other sections of the child safety seat or relative to each other. As the skilled person will understand, the child safety seat 1 may alternatively be provided so that displacing belt guide unit 4 may cause the relative movement to occur between at least one section of the child safety seat such as the first section 2, second section 3, rod 9. In the embodiment shown in the figures 1-4, the head rest is shifted in a height direction of the child safety seat 1 illustrated by arrow H, to fit the child safety seat 1 to the size of the child. As the displacement of the belt guide unit 4 is made dependent on the adjustment of the head rest, the holding portion 6 of belt guide unit 4 is caused to move in the width direction of the of child safety seat 1, indicated by arrow W in the figures. The displacement of the belt guide unit 4 may of course be connected to other sections/parts of the child safety seat 1 than the head rest, and also the head rest may be moved relative to other sections than the back section, for instance the sitting section.

To make sure the seat belt is placed correctly on the shoulder of the child, the subsequent angular displacement of the belt guide unit 4 in accordance with the first embodiment of the invention and the subsequent rectilinear displacement of the belt guide unit 4 in accordance with the second or third embodiment of the invention, when moving the head rest or other parts of the child safety seat 1 for adjusting to the size of the child, may be predetermined based on information on the correlation between shoulder heights and shoulder widths of children. In addition the child safety seat may be provided with additional means for the fine tuning of the position of the belt guide unit 4, to allow for the individual adaptation.

In figs 1, 2 the first attachment means provide a pivotal connection between the belt guide unit 4 and the head rest 2 to adjust the holding portion 6 in the width direction W. The second attachment means provide a pivotal connection between the belt guide unit 4 and the back rest 3.

The first attachment means is shown provided by a first connecting device 7 and the second attachment means is shown provided by a second connecting device. 8. The first portion of the first connecting device 7 is fixed to the head rest 2, while the second portion of the first connecting device 7 is pivotally connected to the belt guide unit 4. Further, the first portion of the second connecting device 8 is fixed directly or indirectly to the back rest 3, while the second portion of the second connecting device 8 is pivotally connected to the belt guide unit 4.

First connecting device 7 provides the connection of the attachment portion 5/ belt guide unit 4 to the first section as illustrated in the figs. Second connecting device 8 provides the connection of the attachment portion 5/ belt guide unit 4 to the second section as illustrated. The second connecting device 8 is shown joined to the second section 3 by the arrangement of a rod 9. The second connecting device 8 may also be arranged in a more direct connection to the second section 3, by connecting the second connecting device 8 directly to the second section 3 and omitting the rod 9.

By this arrangement of the attachment means, the angular movement of the belt guide unit 4 and thereby the shifting of the holding portion 6 in the width direction W, follows the displacement of the head rest 2 in the height direction H.
In the first embodiment shown in figures 1 and 2, the movement of the belt guide unit 4 and the movement of the head rest is connected so that moving the head rest 2 upwards in the height direction H, leads to the angularly shifting of the belt guide unit 4 and the moving of the holding portion 6 outward in the width direction W. And the other way round; moving the head rest downward in the height direction H, leads to the angularly shifting of the belt guide unit 4 and the moving of the holding portion 6 inward in the width direction W.

In figs 3, 4 the first attachment means (not shown in the figs) is provided as a sliding connection to make the belt guide unit able to slide to adjust the holding portion 6 in the width direction W. By this sliding connection the belt guide unit is displaced by a rectilinear movement in the width direction W of the child safety seat.

The belt guide unit 4 is shown with a recess 12 provided in the attachment portion 6 of the belt guide unit 4. The recess 12 is arranged angularly as shown in figures 3 and 4. The second attachment means provides a sliding connection between the belt guide unit and the second section of the child safety seat. The second attachment means comprises a second fastening device 8 and the recess 12, wherein the first portion of the second connecting device is fixed directly or indirectly to the second structure of the child safety seat, and the second portion of the second connecting device is received in the recess 12. The second fastening device 8 is arranged to move in the recess 12, when the head rest 2 is moved in the height direction H.

By this arrangement of the first and second attachment means, the rectilinear movement of the belt guide unit 4 and thereby the shifting of the holding portion 6 in the width direction W, follows the displacement of the head rest 2 in the height direction H. As shown in figures 3 and 4, the movement of the belt guide unit 4 and the movement of the head rest are connected so that moving the head rest 2 upwards in the height direction H, leads to moving the second fastening device 8 in the recess 12.The second fastening device 8 is restricted to move in the height direction of the child safety seat, and movement in the width direction of the child safety seat, is prohibited. By this arrangement the belt guide unit is forced to move outward when the second fastening device 8 moves upward, and inward when the second fastening device 8 moves downward.

When moving the second fastening device 8 downward in the angular recess 12, a rectilinear shifting of the belt guide unit 4 occurs, and the holding portion 6 is moved outward in the width direction W, until reaching an end position as shown in fig 4. And the other way round; by moving the head rest downward in the height direction H, the second fastening device 8 is caused to move upward in the angular recess 12, and by this arranging for the rectilinear shifting of the belt guide unit 4, and the moving of the holding portion 6 inward in the width direction W until reaching an end position as shown in fig 3.

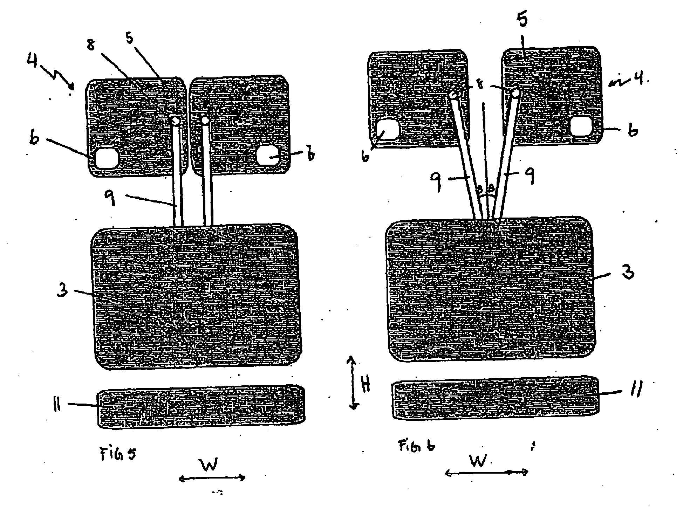

In figs 5, 6 the second attachment means is provided by a second fastening device 8 connected to the rod 9 and to the attachment portion 5 of the belt guide unit 4. The rods 9 are provided for displacement in the height direction H and for angular displacements β. The adjustment of the guide unit 4 is thereby caused by the height displacement and angular displacement of rods 9. As shown in fig 5, when the rods 9 are shifted in the upward height direction H and displaced angularly outward, the belt guide units 4 are caused to move outwards in the width direction W. The belt guide units 4 are provided to be displaced by a rectilinear movement outward.
When shifting the rods 9 downward in the height direction H and displacing the rods angularly inward from the position as shown in fig 5, the belt guide units 4 are caused to move inwards. The rods as shown in fig 5-6 may be integrated in a section of the child safety seat such as the head rest, or may function as separate sections which are used to operate the belt guide units 4 solely.

As described in the general part of the description, the adjustment of the belt guide unit 4 may be carried out directly by the user without producing the relative movement between the various parts of the child safety seat. Further, the adjustment of one belt guide unit 4 may be connected to various movement patterns of the sections of the child safety seat, as described earlier.

## Claims

1. A child safety seat (1) provided with at least one belt guide unit (4) for the arrangement of at least a portion of a seat belt of a vehicle, wherein the belt guide unit (4) preferably is integrated in or connected to at least one section (2, 3, 11) of the child safety seat (1), or integrated in or connected to at least an additional part arranged on or adjacent to the child safety seat (1), the belt guide unit (4) is adjustable in the width direction (W) of the child safety seat to fit the belt guide unit (4) in accordance with the width dimension of the shoulder of a child **characterized in that** the adjustment of the belt guide unit (4) outward in the width direction (W) is made dependent on the upward height adjustment of the at least one section (2, 3, 9, 11) of the child safety seat (1), whereby the belt guide unit (4) consequently also is adjusted in the upward height direction of the child safety seat (1), where each belt guide unit (4) is connected to a rod (9).

2. A child safety seat (1) provided with at least one belt guide unit (4) for the arrangement of at least a portion of a seat belt, wherein the belt guide unit (4) preferably is integrated in or connected to at least one section (2, 3, 11) of the child safety seat (1), or integrated in or connected to at least an additional part arranged on or adjacent to the child safety seat (1) according to claim 1,
**characterized in that** the adjustment of the belt guide unit (4) is caused by the relative movement between at least two sections (2, 3, 11) of the child safety seat (1), or between at least one section (2, 3, 11) of the child safety seat (1) and/or at least the additional part arranged on or adjacent to the child safety seat (1).

3. A child safety seat (1) according to claim 1,
**characterized in that** the child safety seat (1) is arranged adjustable in the height direction (H) of the child safety seat.

4. A child safety seat (1) according to one of the proceeding claims 1-3,
**characterized in that** the adjustment of the belt guide unit (4) is done manually, or is caused by the movement of at least one section (2, 3, 11) of the child safety seat (1), or by at least the additional part arranged on or adjacent to the child safety seat (1).

5. A child safety seat (1) according to one of the proceeding claims 1-3,
**characterized in that** at least two belt guide units (4) are provided, wherein the adjustment of one of the belt guide units (4) causes the adjustment of at least one of the other belt guide units (4).

6. A child safety seat (1) according to one of the proceeding claims 1-4,
**characterized in that** at least two belt guide units (4) are provided, and the movement of at least one section (2,3, 11) causes the adjustment of at least one of the two belt guide units (4), wherein the adjustment of this belt guide unit (4) possibly causes the adjustment of at least one of the other belt guide units (4).

7. A child safety seat (1) according to one of the proceeding claims 1-3,
**characterized in that** the child safety seat (1) is provided with one belt guide unit (4) arranged to be displaced between the right side and left side of the child safety seat (1).

8. A child safety seat (1) according to one of the proceeding claims 1-7,
**characterized in that** the child safety seat (1) comprises at least a first section (2) and second section (3) (preferably the first section is constituted by a head section and the second section is constituted by a back section), wherein at least two of the sections (2, 3, 11) are movable relative to each other, the belt guide unit (4) has first attachment means providing a connection to the first section (2) of the child safety seat (1) and second attachment means providing a connection to the second section (3) of the child safety seat (1), wherein the relative movement between at least the first and second section (2, 3) causes the adjustment, preferably displacement of the belt guide unit (4), or vice versa.

9. A child safety seat (1) according to one of the proceeding claims 1-8,
**characterized in that** it comprises three sections (2, 3, 11), (wherein a third section preferably is constituted by a sitting section), and wherein the relative movement between the three sections (2, 3, 11) causes displacement of the belt guide unit (4), preferably that the relative movement is produced by moving the head rest (2) relative to the back section (3) and/or sitting section (11).

10. A child safety seat (1) according to one of the proceeding claims 1-9,
**characterized in that** the adjustment preferably the displacement of the belt guide unit (4) is constituted by an angular or rectilinear movement of the belt guide unit (4) and/or the relative movement between the first and second section (2, 3), and possibly also a third section (11), is constituted by an rectilinear or an angular movement.

11. A child safety seat (1) according to one of the proceeding claims 1-10,
**characterized in that** the belt guide unit (4) comprises a holding portion (6) for receiving the seat belt and an attachment portion (5), preferably that the attachment portion (5) is provided with the first and second attachment means.

12. A child safety seat (1) according to one of the proceeding claims 8-11,
**characterized in that** the first attachment means provides a pivotal connection between the belt guide unit (4) and the first section (2) of the child safety seat (1).

13. A child safety seat (1) according to one of the proceeding claims 8-12,
**characterized in that** the second attachment means provides a pivotal connection between the belt guide unit (4) and the second section (3) of the child safety seat (1).

14. A child safety seat (1) according to one of the proceeding claims 8-13,
**characterized in that** the first attachment means comprises a first connecting device, wherein the first portion of the first connecting device is fixed to the first structure of the child safety seat (1), and the second portion of the first connecting device is pivotally connected to the belt guide unit (4).

15. A child safety seat (1) according to one of the proceeding claims 8-14,
**characterized in that** the second attachment means comprises a second connecting device, wherein the first portion of the second connecting device is fixed directly or indirectly to the second structure of the child safety seat (1), and the second portion of the second connecting device is pivotally connected to the belt guide unit (4).

16. A child safety seat (1) according to one of the proceeding claims 8-11,
**characterized in that** the first attachment means provides a sliding connection between the belt guide unit (4) and the first section (2) of the child safety seat (1), preferably that the sliding connection provides for the belt guide unit (4) to be displaced by a rectilinear movement preferably in the width direction (W) of the child safety seat (1).

17. A child safety seat (1) according to one of the proceeding claims 8-11, 15-16,
**characterized in that** the second attachment means provides a sliding connection between the belt guide unit (4) and the second section (3) of the child safety seat (1).

18. A child safety seat (1) according to one of the proceeding claims 8-11, 15-16,
**characterized in that** the second attachment means comprises a second connecting device, preferably that the first portion of the second connecting device is fixed directly or indirectly to the second structure of the child safety seat (1).

19. A child safety seat (1) according to one of the proceeding claims 8-11, 16-18,
**characterized in that** the second attachment means comprises a second connecting device and a recess (12) provided in the belt guide unit (4).

20. A child safety seat (1) according to claim 19,
**characterized in that** the second portion of the second connecting device is received in the recess (12), preferably that the recess (12) has an angular orientation.

21. A child safety seat (1) according to one of the proceeding claims 8-20,
**characterized in that** the second structure of the child safety seat (1) is arranged with joining devices, preferably at least one rod (9) providing the connection between the second connecting means and the second structure of the child safety seat (1).

22. A child safety seat (1) according to one of the proceeding claims 11-21,
**characterized in that** the belt holding portion (6) is arranged for receiving a portion of the seat belt, preferably the belt holding portion (6) is arranged as an opening, an open or closable hook etc.

23. A child safety seat (1) according to one of the proceeding claims 8-22,
**characterized in that** the movement of the first section (2) upwards or downwards, preferably in the height direction (H) of the child safety seat (1), causes the belt guide unit (4) to be adjusted, preferably to pivot or to move rectilinearly outwards or inwards in the width (W) direction of the child safety seat (1).

24. A method for shifting the position of the belt guide unit (4) belonging to child safety seat (1) comprising at least a first section (2) and a second section (3) or an additional part arranged on or adjacent to the child safety seat (1), preferably the first section (2) is constituted by a head section and the second section (3) is constituted by a back section, and possibly also a third section (11), preferably constituted by a sitting section, the belt guiding unit preferably being integrated in or connected to the at least one section (2, 3, 11) of the child safety seat (1), or integrated in or connected to at the least additional part arranged on or adjacent to the child safety seat (1), the belt guide unit is provided to be adjustable in at least a first direction
**characterized in that**
moving at least the first section (2) or/and second section (3) or/and third section (11) and/or an additional part in an upwardly height direction causes shifting of the belt guide unit (4), preferably moving the belt guide unit (4) angularly or rectilinearly outwards in the width direction (W) of the child safety seat (1), whereby the displacement of the belt guide unit (4) is made dependent on the upwardly height adjustment of the at least one section (2, 3, 9, 11) of the child safety seat (1), whereby the belt guide unit (4) consequently also is adjusted in the upwardly height direction of the child safety seat, -moving the first section (2) or/and the second section (3) or/and third section (11) or/and the additional part in a downwardly height direction causes shifting of the belt guide unit (4), preferably moving the belt guide unit (4) angularly or rectilinearly inwards in the width direction (W) of the child safety seat (1), whereby the displacement of the belt guide unit (4) is made dependent on the downwardly height adjustment of the at least one section (2, 3, 9, 11) of the child safety seat (1), whereby the belt guide unit (4) consequently also is adjusted in the downwardly height direction of the child safety seat.

## Patentansprüche

1. Kindersicherheitssitz (1), der mit mindestens einer Gurtführungseinheit (4) für die Anordnung von mindestens einem Bereich eines Sicherheitsgurtes in einem Fahrzeug versehen ist, wobei die Gurtführungseinheit (4) vorzugsweise in mindestens eine Sektion (2, 3, 11) des Kindersicherheitssitzes (1) integriert oder mit dieser verbunden ist, oder in mindestens ein zusätzliches Teil, das an dem Kindersicherheitssitz (1) angeordnet oder diesem benachbart ist, integriert ist oder mit diesem verbunden ist, wobei die Gurtführungseinheit (4) in der Breitenrichtung (W) des Kindersicherheitssitzes einstellbar ist, um die Gurtführungseinheit (4) in Abhängigkeit von der Breitenabmessung der Schulter des Kindes anzupassen,
**dadurch gekennzeichnet, daß** die Einstellung der Gurtführungseinheit (4) nach außen in der Breitenrichtung (W) in Abhängigkeit von der aufwärtsgerichteten Höheneinstellung von mindestens einer Sektion (2, 3, 9,11) des Kindersicherheitssitzes (1) erfolgt, so daß die Gurtführungseinheit (4) infolgedessen auch in der Höhenrichtung des Kindersicherheitssitzes (1) eingestellt wird, wobei jede Gurtführungseinheit (4) mit einer Stange (9) verbunden ist.

2. Kindersicherheitssitz (1), der mit mindestens einer Gurtführungseinheit (4) für die Anordnung von mindestens einem Bereich eines Sicherheitsgurtes versehen ist, wobei die Gurtführungseinheit (4) vorzugsweise in mindestens eine Sektion (2, 3, 11) des Kindersicherheitssitzes (1) integriert oder mit dieser verbunden ist, oder in mindestens ein zusätzliches Teil, das an dem Kindersicherheitssitz (1) angeordnet oder diesem benachbart ist, integriert ist oder mit diesem verbunden ist, nach Anspruch 1,
**dadurch gekennzeichnet,**
**daß** die Einstellung der Gurtführungseinheit (4) mit einer Relativbewegung zwischen mindestens zwei Sektionen (2, 3, 11) des Kindersicherheitssitzes (1) hervorgerufen wird, oder durch eine Relativbewegung zwischen mindestens einer Sektion (2, 3, 11) des Kindersicherheitssitzes (1) und/oder zumindest dem zusätzlichen Teil hervorgerufen wird, das an dem Kindersicherheitssitz (1) angeordnet ist oder diesem benachbart ist.

3. Kindersicherheitssitz (1) nach Anspruch 1,
**dadurch gekennzeichnet,**
**daß** der Kindersicherheitssitz (1) in der Höhenrichtung (H) des Kindersicherheitssitzes einstellbar angeordnet ist.

4. Kindersicherheitssitz (1) nach einem der vorhergehenden Ansprüche 1 bis 3,
**dadurch gekennzeichnet,**
**daß** die Einstellung der Gurtführungseinheit (4) manuell erfolgt oder hervorgerufen wird durch die Bewegung von mindestens einer Sektion (2, 3, 11) des Kindersicherheitssitzes (1), oder zumindest von dem zusätzlichen Teil, das an dem Kindersicherheitssitz (1) angeordnet oder diesem benachbart ist.

5. Kindersicherheitssitz (1) nach einem der vorhergehenden Ansprüche 1 bis 3,
**dadurch gekennzeichnet,**
**daß** mindestens zwei Gurtführungseinheiten (4) vorgesehen sind, wobei die Einstellung von einer der Gurtführungseinheiten (4) eine Einstellung von zumindest einer der anderen Gurtführungseinheiten (4) bewirkt.

6. Kindersicherheitssitz (1) nach einem der vorhergehenden Ansprüche 1 bis 4,
**dadurch gekennzeichnet,**
**daß** mindestens zwei Gurtführungseinheiten (4) vorgesehen sind
und **daß** die Bewegung von mindestens einer Sektion (2, 3, 11) eine Einstellung von mindestens einer der zwei Gurtführungseinheiten (4) bewirkt, wobei die Einstellung dieser Gurtführungseinheiten (4) möglicherweise die Einstellung von mindestens einer der anderen Gurtführungseinheiten (4) bewirkt.

7. Kindersicherheitssitz (1) nach einem der vorhergehenden Ansprüche 1 bis 3,
**dadurch gekennzeichnet,**
**daß** der Kindersicherheitssitz (1) mit einer Gurtführungseinheit (4) versehen ist, die derart angeordnet ist, daß sie zwischen der rechten Seite und der linken Seite des Kindersicherheitssitzes (1) verlagerbar ist.

8. Kindersicherheitssitz (1) nach einem der vorhergehenden Ansprüche 1 bis 7,
**dadurch gekennzeichnet,**
**daß** der Kindersicherheitssitz (1) mindestens eine erste Sektion (2) und eine zweite Sektion (3) aufweist, wobei vorzugsweise die erste Sektion von einer Kopfsektion gebildet ist und die zweite Sektion von einer Rückenlehnensektion gebildet ist, wobei mindestens zwei der Sektionen (2, 3, 11) relativ zueinander bewegbar sind, wobei die Gurtführungseinheit (4) eine erste Befestigungseinrichtung, die eine Verbindung zu der ersten Sektion (2) des Kindersicherheitssitzes (1) bildet, und eine zweite Befestigungseinrichtung aufweist, die eine Verbindung zu der zweiten Sektion (3) des Kindersicherheitssitzes (1) bildet, wobei die Relativbewegung zumindest zwischen der ersten Sektion (2) und der zweiten Sektion (3) die Einstellung bewirkt, vorzugsweise eine Verlagerung der Gurtführungseinheit (4), oder umgekehrt.

9. Kindersicherheitssitz (1) nach einem der vorhergehenden Ansprüche 1 bis 8,
**dadurch gekennzeichnet,**
**daß** er drei Sektionen (2, 3, 11) aufweist, wobei eine dritte Sektion vorzugsweise von einer Sitzsektion gebildet ist, und wobei die Relativbewegung zwischen den drei Sektionen (2, 3, 11) eine Verlagerung der Gurtführungseinheit (4) bewirkt, vorzugsweise derart, daß die Relativbewegung durch die Bewegung der Kopfstütze (2) relativ zu der Rückenlehnensektion (3) und/oder der Sitzsektion (11) erzeugt wird.

10. Kindersicherheitssitz (1) nach einem der vorhergehenden Ansprüche 1 bis 9,
**dadurch gekennzeichnet,**
**daß** die Einstellung, vorzugsweise die Verlagerung der Gurtführungseinheit (4), erfolgt durch eine Winkelbewegung oder geradlinige Bewegung der Gurtführungseinheit (4) und/oder die Relativbewegung zwischen der ersten Sektion (2) und der zweiten Sektion (3), und möglicherweise auch einer dritten Sektion (11), in Form einer geradlinigen Bewegung oder einer Winkelbewegung.

11. Kindersicherheitssitz (1) nach einem der vorhergehenden Ansprüche 1 bis 10,
**dadurch gekennzeichnet,**
**daß** die Gurtführungseinheit (4) einen Haltebereich (6) zur Aufnahme des Sicherheitsgurtes und einen Befestigungsbereich (5) aufweist
und **daß** der Befestigungsbereich (5) vorzugsweise mit den ersten und zweiten Befestigungseinrichtungen versehen ist.

12. Kindersicherheitssitz (1) nach einem der vorhergehenden Ansprüche 8 bis 11,
**dadurch gekennzeichnet,**
**daß** die erste Befestigungseinrichtung eine Gelenkverbindung zwischen der Gurtführungseinheit (4) und der ersten Sektion (2) des Kindersicherheitssitzes (1) bildet.

13. Kindersicherheitssitz (1) nach einem der vorhergehenden Ansprüche 8 bis 12,
**dadurch gekennzeichnet,**
**daß** die zweite Befestigungseinrichtung eine Gelenkverbindung zwischen der Gurtführungseinheit (4) und der zweiten Sektion (3) des Kindersicherheitssitzes (1) bildet.

14. Kindersicherheitssitz (1) nach einem der vorhergehenden Ansprüche 8 bis 13,
**dadurch gekennzeichnet,**
**daß** die erste Befestigungseinrichtung eine erste Verbindungseinrichtung aufweist, wobei der erste Bereich der ersten Verbindungseinrichtung an der ersten Struktur des Kindersicherheitssitzes (1) befestigt ist und der zweite Bereich der ersten Verbindungseinrichtung gelenkig mit der Gurtführungseinheit (4) verbunden ist.

15. Kindersicherheitssitz (1) nach einem der vorhergehenden Ansprüche 8 bis 14,
**dadurch gekennzeichnet,**
**daß** die zweite Befestigungseinrichtung eine zweite Verbindungseinrichtung aufweist, wobei der erste Bereich der zweiten Verbindungseinrichtung direkt oder indirekt an der zweiten Struktur des Kindersicherheitssitzes (1) befestigt ist und der zweite Bereich der zweiten Verbindungseinrichtung gelenkig mit der Gurtführungseinheit (4) verbunden ist.

16. Kindersicherheitssitz (1) nach einem der vorhergehenden Ansprüche 8 bis 11,
**dadurch gekennzeichnet,**
**daß** die erste Befestigungseinrichtung eine Gleitverbindung zwischen der Gurtführungseinheit (4) und der ersten Sektion (2) des Kindersicherheitssitzes (1) bildet, vorzugsweise derart, daß die Gleitverbindung dafür sorgt, daß die Gurtführungseinheit (4) durch eine geradlinige Bewegung, vorzugsweise in der Breitenrichtung (W) des Kindersicherheitssitzes (1) verlagert wird.

17. Kindersicherheitssitz (1) nach einem der vorhergehenden
Ansprüche 8 bis 11 und 15 bis 16,
**dadurch gekennzeichnet,**
**daß** die zweite Befestigungseinrichtung eine Gleitverbindung zwischen der Gurtführungseinheit (4) und der zweiten Sektion (3) des Kindersicherheitssitzes (1) bildet.

18. Kindersicherheitssitz (1) nach einem der vorhergehenden
Ansprüche 8 bis 11 und 15 bis 16,
**dadurch gekennzeichnet,**
**daß** die zweite Befestigungseinrichtung eine zweite Verbindungseinrichtung aufweist, vorzugsweise derart, daß der erste Bereich der zweiten Verbindungseinrichtung direkt oder indirekt an der zweiten Struktur des Kindersicherheitssitzes (1) befestigt ist.

19. Kindersicherheitssitz (1) nach einem der vorhergehenden
Ansprüche 8 bis 11 und 16 bis 18,
**dadurch gekennzeichnet,**
**daß** die zweite Befestigungseinrichtung eine zweite Verbindungseinrichtung und eine Aussparung (12) aufweist, die in der Gurtführungseinheit (4) vorgesehen ist.

20. Kindersicherheitssitz (1) nach Anspruch 19,
**dadurch gekennzeichnet,**
**daß** der zweite Bereich der zweiten Verbindungseinrichtung in der Aussparung (12) aufgenommen ist, vorzugsweise derart, daß die Aussparung (12) eine winkelmäßige Orientierung besitzt.

21. Kindersicherheitssitz (1) nach einem der vorhergehenden Ansprüche 8 bis 20,
**dadurch gekennzeichnet,**
**daß** die zweite Struktur des Kindersicherheitssitzes (1) mit Verbindungseinrichtungen ausgebildet ist, vorzugsweise mit mindestens einer Stange (9), welche die Verbindung zwischen der zweiten Verbindungseinrichtung und der zweiten Struktur des Kindersicherheitssitzes (1) bildet.

22. Kindersicherheitssitz (1) nach einem der vorhergehenden Ansprüche 11 bis 21,
**dadurch gekennzeichnet,**
**daß** der Gurthaltebereich (6) zur Aufnahme eines Bereiches des Sicherheitsgurtes ausgebildet ist, wobei der Gurthaltebereich (6) vorzugsweise als Öffnung, als offener oder schließbarer Haken etc. ausgebildet ist.

23. Kindersicherheitssitz (1) nach einem der vorhergehenden Ansprüche 8 bis 22,
**dadurch gekennzeichnet,**
**daß** die Bewegung der ersten Sektion (2) nach oben oder unten, vorzugsweise in der Höhenrichtung (H) des Kindersicherheitssitzes (1), dafür sorgt, daß die Gurtführungseinheit (4) eingestellt wird, vorzugsweise derart, daß sie schwenkt oder sich geradlinig in der Breitenrichtung (W) des Kindersicherheitssitzes (1) nach außen oder innen bewegt.

24. Verfahren zum Verlagern der Position der Gurtführungseinheit (4), die zu einem Kindersicherheitssitz (1) gehört, der zumindest eine erste Sektion (2) und eine zweite Sektion (3) oder ein zusätzliches Teil aufweist, das an dem Kindersicherheitssitz (1) angeordnet oder diesem benachbart ist, wobei vorzugsweise die erste Sektion (2) von einer Kopfsektion und die zweite Sektion (3) von einer Rückenlehnensektion gebildet ist, und möglicherweise auch eine dritte Sektion (11) aufweist, die vorzugsweise von einer Sitzsektion gebildet ist, wobei die Gurtführungseinheit vorzugsweise in mindestens eine Sektion (2, 3, 11) des Kindersicherheitssitzes (1) integriert oder mit dieser verbunden ist, oder zumindest in das zusätzliche Teil, das an dem Kindersicherheitssitz (1) angeordnet oder diesem benachbart ist, integriert ist oder mit diesem verbunden ist, wobei die Gurtführungseinheit so vorgesehen ist, daß sie in mindestens einer Richtung einstellbar ist,
**dadurch gekennzeichnet,**
**daß** das Bewegen von zumindest der ersten Sektion (2) oder/und der zweiten Sektion (3) oder/und der dritten Sektion (11) oder/und einem zusätzlichen Teil in einer aufwärts weisenden Höhenrichtung eine Verlagerung der Gurtführungseinheit (4) bewirkt, vorzugsweise ein Bewegen der Gurtführungseinheit (4) winkelmäßig oder geradlinig nach außen in der Breitenrichtung (W) des Kindersicherheitssitzes (1), wobei die Verlagerung der Gurtführungseinheit (4) in Abhängigkeit von einer nach oben gerichteten Höheneinstellung von der mindestens einen Sektion (2, 3, 9, 11) des Kindersicherheitssitzes (1) erfolgt, wobei die Gurtführungseinheit (4) infolgedessen auch in der aufwärts weisenden Höhenrichtung des Kindersicherheitssitzes eingestellt wird,
und **daß** das Bewegen der ersten Sektion (2) oder/und der zweiten Sektion (3) oder/und der dritten Sektion (11) oder/und des zusätzlichen Teiles in einer nach unten weisenden Höhenrichtung eine Verlagerung der Gurtführungseinheit (4) bewirkt, vorzugsweise ein Bewegen der Gurtführungseinheit (4) winkelmäßig oder geradlinig nach innen in der Breitenrichtung (W) des Kindersicherheitssitzes (1), wobei die Verlagerung der Gurtführungseinheit (4) in Abhängigkeit von der nach unten gerichteten Höheneinstellung der mindestens einen Sektion (2, 3, 9, 11) des Kindersicherheitssitzes (1) erfolgt, wobei die Gurtführungseinheit (4) infolgedessen auch in der nach unten weisenden Höhenrichtung des Kindersicherheitssitzes eingestellt wird.

## Revendications

1. Siège de sécurité pour enfant (1) doté d'au moins une unité de guidage de ceinture (4) pour l'agencement d'au moins une partie d'une ceinture de siège dans un véhicule, dans lequel l'unité de guidage de ceinture (4) est de préférence intégrée dans ou raccordée à au moins une section (2, 3, 11) du siège de sécurité pour enfant (1), ou intégrée dans ou raccordée à au moins une partie supplé-mentaire agencée sur ou adjacente au siège de sécurité pour enfant (1), où l'unité de guidage de ceinture (4) est réglable dans la direction de la largeur (W) du siège de sécurité pour enfant pour s'adapter à l'unité de guidage de ceinture (4) selon la dimension en largeur de l'épaule d'un enfant, **caractérisé en ce que** le réglage de l'unité de guidage de ceinture (4) vers l'extérieur dans la direction de la largeur (W) dépend du réglage en hauteur vers le haut de l'au moins une section (2, 3, 9, 11) du siège de sécurité pour enfant (1), moyennant quoi l'unité de guidage de ceinture (4) est par conséquent également ajustée vers le haut dans la direction de la hauteur du siège de sécurité pour enfant, où chaque unité de guidage est raccordée à une tige.

2. Siège de sécurité pour enfant (1) doté d'au moins une unité de guidage de ceinture (4) pour l'agencement d'au moins une partie d'une ceinture de siège, dans lequel l'unité de guidage de ceinture (4) est de préférence intégrée dans ou raccordée à au moins une section (2, 3, 11) du siège de sécurité pour enfant (1), ou intégrée dans ou raccordée à au moins une partie supplémentaire agencée sur ou adjacente au siège de sécurité pour enfant (1) selon la revendication 1, **caractérisé en ce que** le réglage de l'unité de guidage de ceinture (4) est causé par le mouvement relatif entre au moins deux sections (2, 3, 11) du siège de sécurité pour enfant (1), ou entre au moins une section (2, 3, 11) du siège de sécurité pour enfant (1) et/ou au moins la partie supplémentaire agencée sur ou adjacente au siège de sécurité pour enfant (1).

3. Siège de sécurité pour enfant (1) selon la revendication 1, **caractérisé en ce que** le siège de sécurité pour enfant (1) est réglable dans la direction de la hauteur (H) du siège de sécurité pour enfant.

4. Siège de sécurité pour enfant (1) selon l'une quelconque des revendications 1 à 3 précédentes, **caractérisé en ce que** le réglage de l'unité de guidage de ceinture (4) est réalisé manuellement, ou est causé par le mouvement d'au moins une section (2, 3, 11) du siège de sécurité pour enfant (1), ou par au moins la partie supplémentaire agencée sur ou adjacente au siège de sécurité pour enfant (1).

5. Siège de sécurité pour enfant (1) selon l'une quelconque des revendications 1 à 3 précédentes, **caractérisé en ce qu'**au moins deux unités de guidage de ceinture (4) sont prévues, dans lequel le réglage de l'une des unités de guidage de ceinture (4) entraîne le réglage d'au moins l'une des autres unités de guidage de ceinture (4).

6. Siège de sécurité pour enfant (1) selon l'une quelconque des revendications 1 à 4 précédentes, **caractérisé en ce qu'**au moins deux unités de guidage de ceinture (4) sont prévues, et le mouvement d'au moins une section (2, 3, 11) entraîne le réglage d'au moins l'une des deux unités de guidage de ceinture (4), dans lequel le réglage de cette unité de guidage de ceinture (4) entraîne éventuellement le réglage d'au moins l'une des autres unités de guidage de ceinture (4).

7. Siège de sécurité pour enfant (1) selon l'une quelconque des revendications 1 à 3 précédentes, **caractérisé en ce que** le siège de sécurité pour enfant (1) est doté d'une unité de guidage de ceinture (4) agencée pour être déplacée entre le côté droit et le côté gauche du siège de sécurité pour enfant (1).

8. Siège de sécurité pour enfant (1) selon l'une quelconque des revendications 1 à 7 précédentes, **caractérisé en ce que** le siège de sécurité pour enfant (1) comprend au moins une première section (2) et une seconde section (3) (de préférence, la première section est constituée par une section de tête et la seconde section est constituée par une section arrière), dans lequel au moins deux des sections (2, 3, 11) sont mobiles l'une par rapport à l'autre, l'unité de guidage de ceinture (4) comporte un premier moyen de fixation fournissant un raccordement avec la première section (2) du siège de sécurité pour enfant (1) et un second moyen de fixation fournissant un raccordement avec la seconde section (3) du siège de sécurité pour enfant (1), dans lequel le mouvement relatif entre au moins la première et la seconde section (2, 3) entraîne le réglage, de préférence le déplacement, de l'unité de guidage de ceinture (4), ou vice versa.

9. Siège de sécurité pour enfant (1) selon l'une quelconque des revendications 1 à 8 précédentes, **caractérisé en ce qu'**il comprend trois sections (2, 3, 11), (dans lequel une troisième section est de préférence constituée par une section d'assise), et dans lequel le mouvement relatif entre les trois sections (2, 3, 11) entraîne le déplacement de l'unité de guidage de ceinture (4), le mouvement relatif étant de préférence produit en déplaçant l'appuie-tête (2) par rapport à la section arrière (3) et/ou la section d'assise (11).

10. Siège de sécurité pour enfant (1) selon l'une quelconque des revendications 1 à 9 précédentes, **caractérisé en ce que** le réglage, de préférence le déplacement de l'unité de guidage de ceinture (4), est constitué par un mouvement angulaire ou rectiligne de l'unité de guidage de ceinture (4) et/ou le mouvement relatif entre la première et la seconde section (2, 3), et éventuellement également une troisième section (11), est constitué par un mouvement rectiligne ou angulaire.

11. Siège de sécurité pour enfant (1) selon l'une quelconque des revendications 1 à 10 précédentes,
**caractérisé en ce que** l'unité de guidage de ceinture (4) comprend une partie de maintien (6) pour recevoir la ceinture de siège et une partie de fixation (5), la partie de fixation (5) étant de préférence dotée du premier et du second moyen de fixation.

12. Siège de sécurité pour enfant (1) selon l'une quelconque des revendications 8 à 11 précédentes, **caractérisé en ce que** le premier moyen de fixation fournit un raccordement pivotant entre l'unité de guidage de ceinture (4) et la première section (2) du siège de sécurité pour enfant (1).

13. Siège de sécurité pour enfant (1) selon l'une quelconque des revendications 8 à 12 précédentes, **caractérisé en ce que** le second moyen de fixation fournit un raccordement pivotant entre l'unité de guidage de ceinture (4) et la seconde section (3) du siège de sécurité pour enfant (1).

14. Siège de sécurité pour enfant (1) selon l'une quelconque des revendications 8 à 13 précédentes, **caractérisé en ce que** le premier moyen de fixation comprend un premier dispositif de raccordement, dans lequel la première partie du premier dispositif de raccordement est fixée à la première structure du siège de sécurité pour enfant (1), et la seconde partie du premier dispositif de raccordement est raccordée de façon pivotante à l'unité de guidage de ceinture (4).

15. Siège de sécurité pour enfant (1) selon l'une quelconque des revendications 8 à 14 précédentes, **caractérisé en ce que** le second moyen de fixation comprend un second dispositif de fixation, dans lequel la première partie du second dispositif de raccordement est fixée directement ou indirectement à la seconde structure du siège de sécurité pour enfant (1), et la seconde partie du second dispositif de raccordement est raccordée de façon pivotante à l'unité de guidage de ceinture (4).

16. Siège de sécurité pour enfant (1) selon l'une quelconque des revendications 8 à 11 précédentes, **caractérisé en ce que** le premier moyen de fixation fournit un raccordement coulissant entre l'unité de guidage de ceinture (1) et la première section (2) du siège de sécurité pour enfant (1), le raccordement coulissant permettant de préférence à l'unité de guidage de ceinture (4) de se déplacer selon un mouvement rectiligne de préférence dans la direction de la largeur (W) du siège de sécurité pour enfant (1).

17. Siège de sécurité pour enfant (1) selon l'une quelconque des revendications 8 à 11, 15 et 16 précédentes, **caractérisé en ce que** le second moyen de fixation fournit un raccordement coulissant entre l'unité de guidage de ceinture (4) et la seconde section (3) du siège de sécurité pour enfant (1).

18. Siège de sécurité pour enfant (1) selon l'une quelconque des revendications 8 à 11, 15 et 16 précédentes, **caractérisé en ce que** le second moyen de fixation comprend un second dispositif de fixation, la première partie du second dispositif de raccordement étant de préférence fixée directement ou indirectement à la seconde structure du siège de sécurité pour enfant (1).

19. Siège de sécurité pour enfant (1) selon l'une quelconque des revendications 8 à 11 et 16 à 18 précédentes, **caractérisé en ce que** le second moyen de fixation comprend un second dispositif de fixation et un encastrement (12) disposé dans l'unité de guidage de ceinture (4).

20. Siège de sécurité pour enfant (1) selon la revendication 19 précédente, **caractérisé en ce que** la seconde partie du second dispositif de raccordement est reçue dans l'encastrement (12), et **en ce que** l'encastrement (12) a de préférence une orientation angulaire.

21. Siège de sécurité pour enfant (1) selon l'une quelconque des revendications 8 à 20 précédentes, **caractérisé en ce que** la seconde structure du siège de sécurité pour enfant (1) est agencée avec des dispositifs de jonction, au moins une tige (9) fournissant de préférence le raccordement entre le second moyen de raccordement et la seconde structure du siège de sécurité pour enfant (1).

22. Siège de sécurité pour enfant (1) selon l'une quelconque des revendications 11 à 21 précédentes, **caractérisé en ce que** la partie de maintien de ceinture (6) est agencée pour recevoir une partie de la ceinture de siège, la partie de maintien de ceinture (6) étant de préférence agencée comme une ouverture, un crochet ouvert ou fermable, etc.

23. Siège de sécurité pour enfant (1) selon l'une quelconque des revendications 8 à 22 précédentes, **caractérisé en ce que** le mouvement de la première section (2) vers le haut ou vers le bas, de préférence dans la direction de la hauteur (H) du siège de sécurité pour enfant (1), entraîne le réglage de l'unité de guidage de ceinture (4), de préférence pour pivoter ou pour se déplacer de façon rectiligne vers l'extérieur ou vers l'intérieur dans la direction de la largeur (W) du siège de sécurité pour enfant (1).

24. Méthode pour déplacer la position de l'unité de guidage de ceinture (4) appartenant au siège de sécurité pour enfant (1) comprenant au moins une première section (2) et une seconde section (3) ou une partie supplémentaire agencée sur ou adjacente au siège de sécurité pour enfant (1), la première section (2) étant de préférence constituée par une section de tête et la seconde section (3) étant constituée par une section arrière, et éventuellement également une troisième section (11), constituée de préférence par une section d'assise, l'unité de guidage de ceinture étant de préférence intégrée dans ou raccordée à au moins une section (2, 3, 11) du siège de sécurité pour enfant (1), ou intégrée dans ou raccordée à l'au moins une partie supplémentaire agencée sur ou adjacente au siège de sécurité pour enfant (1), l'unité de guidage de ceinture pouvant être réglable dans au moins une première direction, **caractérisé en ce que**
■ le déplacement d'au moins la première section (2) et/ou la seconde section (3) et/ou la troisième section (11) et/ou une partie supplémentaire vers le haut dans la direction de la hauteur entraîne le déplacement de l'unité de guidage de ceinture (4), déplaçant de préférence l'unité de guidage de ceinture (4) de façon angulaire ou rectiligne vers l'extérieur dans la direction de la largeur (W) du siège de sécurité pour enfant (1), moyennant quoi le déplacement de l'unité de guidage de ceinture (4) est réalisé selon le réglage de la hauteur vers le haut de l'au moins une section (2, 3, 11) du siège de sécurité pour enfant (1), moyennant quoi l'unité de guidage de ceinture (4) est par conséquent également ajustée vers le haut dans la direction de la hauteur du siège de sécurité pour enfant,
■ le déplacement de la première section (2) et/ou de la seconde section (3) et/ou de la troisième section (11) et/ou de la partie supplémentaire vers le haut dans la direction de la hauteur entraîne le déplacement de l'unité de guidage de ceinture (4), déplaçant de préférence l'unité de guidage de ceinture (4) de façon angulaire ou rectiligne vers l'intérieur dans la direction de la largeur (W) du siège de sécurité pour enfant (1), moyennant quoi le déplacement de l'unité de guidage de ceinture (4) est réalisé selon le réglage de la hauteur vers le bas de l' au moins une section (2, 3, 11) du siège de sécurité pour enfant (1), moyennant quoi l'unité de guidage de ceinture (4) est par conséquent également ajustée vers le bas dans la direction de la hauteur du siège de sécurité pour enfant.
